Europäisches Patentamt

European Patent Office

Office européen des brevets

(11) Publication number: **0 139 474**
**B1**

# EUROPEAN PATENT SPECIFICATION

(45) Date of publication of patent specification: **04.04.90**

(21) Application number: **84306341.3**

(22) Date of filing: **17.09.84**

(51) Int. Cl.⁵: **G 11 B 11/10**

(54) Magneto-optic memory element.

(30) Priority: **16.09.83 JP 171488/83**
**03.07.84 JP 139434/84**
**13.07.84 JP 146234/84**

(43) Date of publication of application:
**02.05.85 Bulletin 85/18**

(45) Publication of the grant of the patent:
**04.04.90 Bulletin 90/14**

(84) Designated Contracting States:
**DE FR GB IT**

(56) References cited:
**EP-A-0 111 988**
**DE-A-2 931 825**
**FR-A-2 485 241**

**PATENT ABSTRACTS OF JAPAN, vol. 8, no. 45
(P-257)1482r, 28th February 1984; & JP - A - 58
196 635**

**PATENT ABSTRACTS OF JAPAN, vol. 6, no. 145
(P-132)1023r, 4th August 1982; & JP - A - 57
66549**

(73) Proprietor: **SHARP KABUSHIKI KAISHA
22-22 Nagaike-cho Abeno-ku
Osaka 545 (JP)**

(72) Inventor: **Takahashi, Akira
9-1-506 Akishinosatsuki-cho
Nara-shi Nara-ken (JP)**
Inventor: **Murakami, Yoshiteru
2613-1 Ichinomoto-cho
Tenri-shi Nara-ken (JP)**
Inventor: **Hirokane, Junji
2613-1 Ichinomoto-cho
Tenri-shi Nara-ken (JP)**
Inventor: **Katayama, Hiroyuki
Teramoto Heights A101 73 Nimyo-cho
Nara-shi Nara-ken (JP)**
Inventor: **Ohta, Kenji
Shiki Mansion 414 89-1 Oaza-Futamata
Yao-shi Osaka-fu (JP)**
Inventor: **Yamaoka, Hideyoshi
2-5-21 Amaminishi
Matsubara-shi Osaka-fu (JP)**

(74) Representative: **Wright, Peter David John et al
R.G.C. Jenkins & Co. 26 Caxton Street
London SW1H 0RJ (GB)**

Courier Press, Leamington Spa, England.

**Description**

The present invention relates to a magneto-optic memory element to which a laser beam can be directed to record, read out or erase information onto or from the element and also to a process for the manufacture of such an element.

Recently, a magneto-optic memory element has been developed, which is used in an optical memory disc which stores alterable information. The most effective magneto-optic memory element includes a recording medium made of an amorphous alloy thin-film consisting of rare earth metal and transition metal. Such a magneto-optic memory element is stable because the recording area is not affected by grain boundaries, and a large size recording medium can be easily formed.

However, the reproduced signal from the conventional magneto-optic memory element including the amorphous alloy thin-film recording layer consisting of rare earth metal and transition metal does not exhibit a satisfactory S/N ratio because the resulting photoelectro-magnetic effects (Kerr effect and Faraday effect) are not sufficient.

To enhance the photoelectro-magnetic effect, the engineering group including the present inventors has developed a magneto-optic memory element which includes an amorphous alloy thin-film recording layer consisting of rare earth metal and transition metal sandwiched by a pair of transparent dielectric layers. Each dielectric layer is generally made of SiO or $SiO_2$. The pair of transparent dielectric layers function to effectively combine the Kerr effect and the Faraday effect so as to increase the Kerr rotation angle. However, in the above-mentioned element, there is a possibility that the amorphous alloy thin-film recording layer is damaged by oxidation caused by the SiO or $SiO_2$ dielectric layer.

French Patent Application FR—A—2485241 discloses a magneto-optic memory medium having the above construction.

A typical element of the above construction is also referred to in published European Patent Application No. 0,111,988.

This prior application, EP—A—0,111,988, which was unpublished as at the priority date of the present application, discloses the provision of a magneto-optic memory device comprising a transparent substrate, a first transparent nitride dielectric layer formed thereon by sputtering, an amorphous alloy thin-film recording layer including a rare-earth element and transition metal formed on the first dielectric layer, a second transparent nitride dielectric layer formed on the recording layer by sputtering and a reflection layer formed on the second dielectric layer.

Accordingly, it would be desirable to provide a magneto-optic memory element including an amorphous alloy thin-film recording layer consisting of rare earth element and transition metal having a low susceptibility to oxidation and which has an enhanced photoelectro-magnetic effect.

According to a first aspect of the present invention there is provided a magneto-optic memory medium comprising an amorphous alloy thin-film recording layer disposed between first and second transparent nitride dielectric films, said second film having a refractive index which is smaller than that of said first film.

According to a second aspect of the present invention there is provided a process for the manufacture of a magneto-optic memory element comprising the steps of:

(a) forming a first transparent nitride dielectric layer on a transparent substrate;

(b) forming an alloy thin-film recording layer including a rare earth element and a transition metal on said first transparent nitride dielectric layer;

(c) forming a second transparent nitride dielectric layer on said alloy thin-film recording layer; and

(d) forming a reflection layer on said second transparent nitride dielectric layer; wherein said first and second transparent nitride dielectric layers are formed by a reactive sputtering method, and wherein the sputtering condition is controlled so as to cause the index of refraction of the second transparent nitride dielectric layer to be less than that of the first transparent nitride dielectric layer.

The first transparent nitride layer is preferably a SiN film 90 nm thick, having an index of refraction of about 2.0. The second transparent nitride layer is preferably an AlN film 40 nm thick, having an index of refraction of about 1.8 to 1.9.

The present invention will be better understood from the detailed description given hereinbelow and the accompanying drawings which are given by way of illustration only, and thus are not limitative of the present invention and wherein:

Figure 1 is a sectional view of an essential part of a known magneto-optic memory element;

Figure 2 is a sectional view of an essential part of an embodiment of a magneto-optic memory element of the present invention;

Figure 3 is a graph showing the index of refraction of a transparent dielectric layer included in another embodiment of a magneto-optic memory element of the present invention; and

Figure 4 is a graph showing the index of refraction of a transparent dielectric layer included in still another embodiment of a magneto-optic memory element of the present invention.

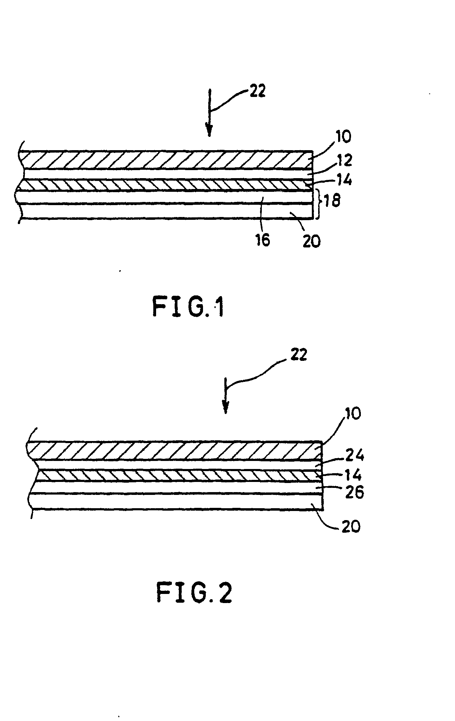

Figure 1 shows a known magneto-optic memory element developed by an engineering group including the present inventors.

The magneto-optic memory element of Figure 1 includes a transparent substrate 10 made of, for example, glass, polycarbonate or acrylic resin. A first transparent dielectic layer 12 is formed on the transparent substrate 10. The first transparent dielectric layer 12 is a SiO film having a 120 nm thickness. An alloy thin-film recording layer 14 including rare earth element and transition metal is formed on the first transparent dielectric layer 12. The alloy thin-film recording layer 12 is a GdTbFe alloy thin-film 15 nm thick. A second transparent dielectric layer 16 is formed on the alloy thin-film recording layer 14. The second transparent dielectric layer 16 is a $SiO_2$ film 50 nm thick. A reflection film layer 20 made of a Cu film 50 nm thick is formed on the second transparent dielectric layer 16. The resulting magneto-optic memory element exhibits a large apparent Kerr rotation angle of 1.75°.

The following is an explanation of why a large Kerr rotation angle is obtained in the magneto-optic memory element of Figure 1.

When a laser beam 22 is applied to the alloy thin-film recording layer 14 through the transparent substrate 10, it is reflected repeatedly in the first transparent dielectric layer 12. The interference of the reflected beam functions to increase the apparent Kerr rotation angle. The Kerr rotation angle increases with the index of refraction of the first transparent dielectric layer 12.

The apparent Kerr rotation angle is further increased by disposing the reflection film layer 20 at the back of the alloy thin-film recording layer 14. The apparent Kerr rotation angle is effectively increased because the second transparent dielectric layer 16 is disposed between the alloy thin-film recording layer 14 and the reflection film layer 20. The function of the second transparent dielectric layer 16 and the reflection film layer 20 will be described hereinbelow in a qualitative manner.

Now assume that the second transparent dielectric layer 16 and the reflection film layer 20 function, in combination, as a reflection layer 18. A first beam introduced through the transparent substrate 10, passed through the alloy thin-film recording layer 14, reflected from the reflection layer 18, and again passed through the alloy thin-film recording layer 14, and a second beam introduced through the transparent substrate 10 and reflected from the surface of the alloy thin-film recording layer 14 are combined with each other. That is, the Kerr effect is produced when the beam is reflected from the surface of the alloy thin-film recording layer 18. Further, the Faraday effect is produced when the beam travels through the alloy thin-film recording layer 14. The Kerr effect and the Faraday effect are combined with each other to increase the apparent Kerr rotation angle. Accordingly, in the magneto-optic memory element of the above construction, it is important to effectively add the Faraday effect to the Kerr effect. The rotation angle derived from the Faraday effect increases with the thickness of the recording layer. However, a thicker recording layer absorbs the laser beam more, which is undesirable. The thickness of the recording layer is selected with reference to the wavelength of the laser beam and the index of refraction of the reflection layer. Generally, the recording layer is constructed to have a thickness of about 10 to 50 nm. It will be clear that the reflection layer should have a high reflectivity. That is, the index of refraction of the reflection layer (including the second transparent dielectric layer 16 and the reflection film layer 20) should be close to zero (0). More specifically, the real part of the refractive index of the second transparent dielectric layer must be small, the imaginary part thereof must be zero (0), and the real part of the reflection film layer must be small.

As discussed above, the Kerr rotation angle is increased when the first transparent dielectric layer 12 is disposed between the transparent substrate 10 and the alloy thin-film recording layer 14, and the reflection layer 18 is disposed at the back of the alloy thin-film recording layer 14. When a SiO film is used as the first transparent dielectric layer 12, and a $SiO_2$ film is used as the second transparent dielectric layer 16, there is a possibility that the alloy thin-film recording layer 14 is oxidized by the oxygen derived from the SiO layer and the $SiO_2$ layer. That is, the oxygen included in the SiO layer and the $SiO_2$ layer is separated at or after the formation of the SiO layer and the $SiO_2$ layer. The alloy thin-film recording layer 14 is damaged when it is oxidized. The oxidation affects significantly the characteristics of the alloy thin-film recording layer 14 when the layer is thin.

Figure 2 shows an embodiment of a magneto-optic memory element of the present invention. Like elements corresponding to those of Figure 1 are indicated by like numerals.

A first transparent nitride dielectric layer 24 90 nm thick is formed on the transparent substrate 10 made of, for example, glass, polycarbonate or acrylic resin. The alloy thin-film recording layer 14 is formed on the first transparent nitride dielectric layer 24. In this example, the alloy thin-film recording layer 14 is a GdTbFe film 35 nm thick. A second transparent nitride dielectric layer 26 40 nm thick is formed on the alloy thin-film recording layer 14. Further, the reflection film layer 16 is formed on the second transparent nitride dielectric layer 26. In this example, the reflection film layer 20 is an Al film having a thickness greater than 40 nm.

Example I

The element comprises the following layers:

Transparent substrate 10—glass substrate
First transparent nitride dielectric layer 24—SiN film of 90 nm thickness
Alloy thin-film recording layer 14—GdTbFe alloy thin-film of 35 nm thickness
Second transparent nitride dielectric layer 26—AlN film of 40 nm thickness
Reflection film layer 20—Al film having a thickness of above 40 nm.

The first transparent nitride dielectric layer 24 is a SiN layer, and the second transparent nitride dielectric layer 26 is an AlN layer. Both SiN and AlN have a high melting point and, therefore, the layers 24 and 26 are stable. The nitride layer is finer than the oxide layer. SiN has an index of refraction of about 2.0. AlN has an index of refraction of about 1.8 to 1.9. That is, the index of refraction of the first transparent

3

# EP 0 139 474 B1

nitride dielectric layer 24 is greater than that of the second transparent nitride dielectric layer 26. As already discussed, the high index of refraction of the first transparent nitride dielectric layer 24 ensures a large Kerr rotation angle, and the low index of refraction of the second transparent nitride dielectric layer 26 ensures a high reflectivity. The thickness of the SiN film layer can be 90 nm ±10%, and the thickness of the AlN film layer can be 40 nm ±10%. Since the SiN film and the AlN film do not include oxygen, oxidation of the alloy thin-film recording layer 14 is minimized.

### Example II

The element comprises the following layers:

Transparent substrate 10—glass substrate

First transparent nitride dielectric layer 24—AlN film of 90 nm thickness

Alloy thin-film recording layer 14—GdTbFe alloy thin-film of 35 nm thickness

Second transparent nitride dielectric layer 26—AlN film of 40 nm thickness

Reflection film layer 20—Al film having a thickness of above 40 nm.

The AlN film of the first transparent nitride dielectric layer 24 has an index of refraction higher than that of the AlN film of the second transparent nitride dielectric layer 26. AlN has a high melting point and, therefore, the layers 24 and 26 are stable. In a preferred form, the AlN film of the first transparent nitride dielectric layer 24 is constructed to have an index of refraction of about 2.0, and the AlN film of the second transparent nitride dielectric layer 26 is constructed to have an index of refraction of about 1.8 to 1.9. The thickness of the AlN film of the first transparent nitride dielectric layer 24 can be 90 nm±10%, and the thickness of the AlN film of the second transparent nitride dielectric layer 26 can be 40 nm±10%. The difference in index of refraction between the two AlN films is generated in the following manner.

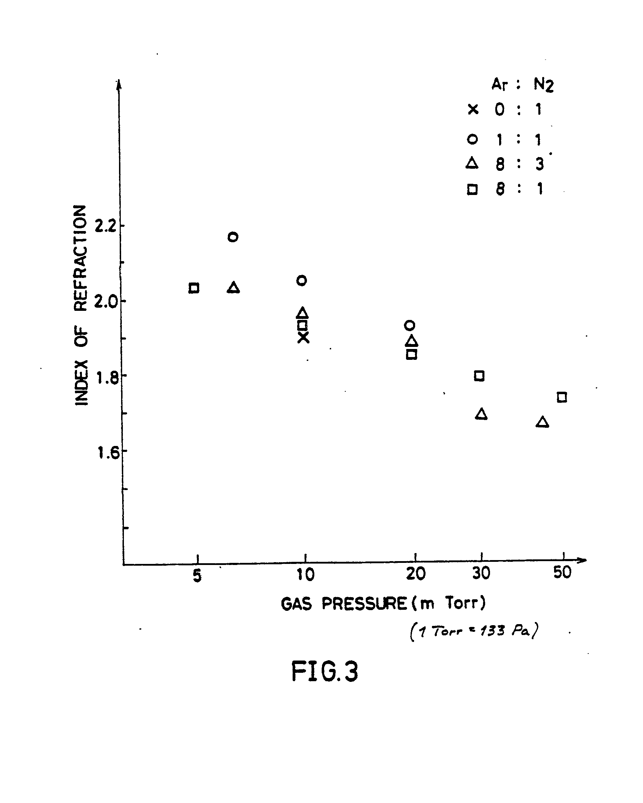

The AlN film is formed using a reactive sputtering method wherein high purity aluminum is used as the target in a mixed gas including Ar and $N_2$. Figure 3 shows the index of refraction of the AlN film formed in various sputtering conditions. The index of refraction is not greatly influenced by the ratio of Ar to $N_2$, but is highly dependent on the gas pressure. The index of refraction is high when the AlN film is formed in a low gas pressure condition. The index of refraction is low when the AlN film is formed in a high gas pressure condition.

### Example III

The element comprises the following layers:

Transparent substrate 10—glass substrate

First transparent nitride dielectric layer 24—$Si_3N_4$ film of 90 nm thickness

Alloy thin-film recording layer 14—GdTbFe alloy thin-film of 35 nm thickness

Second transparent nitride dielectric layer 26—$Si_3N_4$ film of 40 nm thickness

Reflection film layer 20—Al film having a thickness of above 40 nm.

The $Si_3N_4$ film of the first transparent nitride dielectric layer 24 has an index of refraction higher than that of the $Si_3N_4$ film of the second transparent nitride dielectric layer 26. $Si_3N_4$ has a high melting point and, therefore, the layers 24 and 26 are stable. In a preferred form, the $Si_3N_4$ film of the first transparent nitride dielectric layer 24 is constructed to have an index of refraction of about 2.0, and the $Si_3N_4$ film of the second transparent nitride dielectric layer 26 is constructed to have an index of refraction of about 1.8 to 1.9. The thickness of the $Si_3N_4$ film of the first transparent nitride dielectric layer 24 can be 90 nm±10%, and the thickness of the $Si_3N_4$ film of the second transparent nitride dielectric layer 26 can be 40 nm ±10%. The difference in index of refraction between the two $Si_3N_4$ films is generated in the following manner.

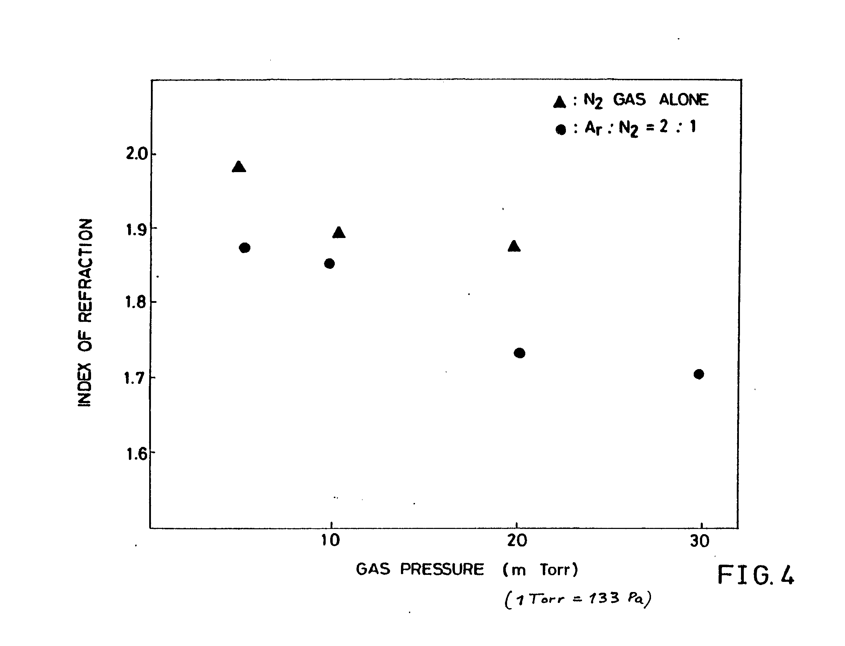

The $Si_3N_4$ films are formed using a reactive sputtering method wherein high purity silicon is used as the target in a $N_2$ gas or in a mixed gas including Ar and $N_2$. Figure 4 shows the index of refraction of the $Si_3N_4$ film formed in various sputtering conditions. The index of refraction depends on the gas pressure and the ratio of Ar to $N_2$. The index of refraction is high when the $Si_3N_4$ film is formed in a low gas pressure condition. The index of refraction is low when the $Si_3N_4$ film is formed in a high gas pressure condition.

## Claims

1. A magneto-optic memory medium comprising an amorphous alloy thin-film recording layer (14) disposed between first (24) and second (26) transparent nitride dielectric films, said second film having a refractive index which is smaller than that of said first film.

2. A magneto-optic memory element as claimed in Claim 1, further comprising:
a transparent substrate (10) formed on said first transparent nitride dielectric layer; and
a reflection layer (20) formed on said second transparent nitride dielectric layer.

3. A magneto-optic memory element according to Claim 1 or Claim 2, wherein said alloy thin-film recording layer is a GdTbFe alloy thin-film layer.

4. A magneto-optic memory element according to Claim 3, wherein said GdTbFe alloy thin-film layer has a thickness of 35 nm.

5. A magneto-optic memory element according to any one of Claims 1 to 4, wherein the index of refraction of said first film is about 2.0, and the index of refraction of said second film is about 1.8 to 1.9.

6. A magneto-optic memory element according to any one of Claims 1 to 5, wherein said first transparent nitride dielectric layer is a SiN film about 90 nm thick, and said second transparent nitride dielectric layer is an AlN film about 40 nm thick.

7. A magneto-optic memory element according to Claim 5, wherein said first transparent nitride dielectric layer is an AlN film about 90 nm thick, and said second transparent nitride dielectric layer is an AlN film about 40 nm thick.

8. A magneto-optic memory element according to Claim 5, wherein said first transparent nitride dielectric layer is a $Si_3N_4$ film about 90 nm thick, and said second transparent nitride dielectric layer is a $Si_3N_4$ film about 40 nm thick.

9. A process for the manufacture of a magneto-optic memory element comprising the steps of:
   (a) forming a first transparent nitride dielectric layer on a transparent substrate;
   (b) forming an alloy thin-film recording layer including a rare earth element and a transition metal on said first transparent nitride dielectric layer;
   (c) forming a second transparent nitride dielectric layer on said alloy thin-film recording layer; and
   (d) forming a reflection layer on said second transparent nitride dielectric layer; wherein
   said first and second transparent nitride dielectric layers are formed by a reactive sputtering method, and wherein the sputtering condition is controlled so as to cause the index of refraction of the second transparent nitride dielectric layer to be less than that of the first transparent nitride dielectric layer.

10. A process according to Claim 9, wherein a gas pressure at which said first transparent nitride dielectric layer is formed is lower than a gas pressure at which said second transparent nitride dielectric layer is formed.

**Patentansprüche**

1. Magnetooptisches Speichermedium mit einer Dünnfilm-Aufzeichnungsschicht (14) aus einer amorphen Legierung, die zwischen einer ersten (24) und einer zweiten dielektrischen Filmschicht (26) aus transparenten Nitrid angeordnet ist und bei dem die zweite Filmschicht einen kleineren Brechungsindex besitzt als die erste Filmschicht.

2. Magnetooptisches Speicherelement nach Anspruch 1, bei dem
auf der ersten dielektrischen Schicht aus transparentem Nitrid ein transparentes Substrat (10) ausgebildet ist und
die zweite dieleketrische Schicht aus transparentem Nitrid durch eine Reflexionsschicht (20) überdeckt ist.

3. Magnetooptisches Speicherelement nach Anspruch 1 oder 2, bei dem die Dünnfilm-Aufzeichnungsschicht aus einer GdTbFe-Legierung besteht.

4. Magnetooptisches Speicherelement nach Anspruch 3, bei dem die Dünnfilmschicht aus GdTbFe-Legierung eine Dicke von 35 nm aufweist.

5. Magnetooptisches Speicherelement nach einem der Ansprüche 1 bis 4, bei dem der Brechungsindex der ersten Filmschicht etwa 2,0 und der Brechungsindex der zweiten Filmschicht etwa 1,8 bis 1,9 beträgt.

6. Magnetooptisches Speicherelement nach einem der Ansprüche 1 bis 5, bei dem die erste dielektrische Schicht aus transparentem Nitrid ein SiN-Film mit einer Schichtdicke von etwa 90 nm und die zweite dielektrische Schicht aus transparentem Nitrid ein AlN-Film mit einer Schichtdicke von etwa 40 nm ist.

7. Magnetooptisches Speicherelement nach Anspruch 5, bei dem die erste dielektrische Schicht aus transparentem Nitrid ein AlN-Film mit einer Schichtdicke von etwa 90 nm und die zweite dielektrische Schicht aus transparentem Nitrid ein AlN-Film mit einer Schichtdicke von etwa 40 nm ist.

8. Magnetooptisches Speicherelement nach Anspruch 5, bei dem die erste dielektrische Schicht aus transparentem Nitrid ein $Si_3N_4$-Film mit einer Schichtdicke von etwa 90 nm und die zweite dielektrische Schicht aus transparentem Nitrid ein $Si_3N_4$-Film mit einer Schichtdicke von etwa 40 nm ist.

9. Verfahren zur Herstellung eines magnetooptischen Speicherelements mit den Verfahrensschritten:
   (a) Erzeugen einer ersten dielektrischen Schicht aus transparentem Nitrid auf einem transparenten Substrat;
   (b) Erzeugen einer Dünnfilm-Aufzeichnungsschicht auf der ersten dielektrischen Schicht aus transparentem Nitrid aus einer Legierung, die ein Seltene Erde-Element und ein Übergangsmetall enthält;
   (c) Ausbilden einer zweiten dielektrischen Schicht aus transparentem Nitrid auf der Legierungs - Dünnfilm - Aufzeichnungsschicht; und
   (d) Ausbilden einer Reflexionsschicht auf der zweiten dielektrischen Schicht aus transparentem Nitrid, wobdi
   die erste und zweite dielektrische Schicht aus transparentem Nitrid mittels eines reaktiven Sputter-Verfahrens aufgebracht werden unter Überwachung der Sputter-Bedingung derart, daß der Brechungsindex der zweiten dielektrischen Schicht aus transparentem Nitrid kleiner bleibt als derjenige der ersten dielektrischen Schicht aus transparentem Nitrid.

10. Verfahren nach Anspruch 9, bei dem der Gasdruck beim Ausbilden der ersten transparentem dielektrischen Nitridschicht kleiner gehalten wird als der Gasdruck beim Erzeugen der zweiten transparenten dielektrischen Nitridschicht.

## Revendications

1. Support de mémoire magnéto-optique comprenant une couche d'enregistrement de film mince en alliage amorphe (14) disposée entre un premier (24) et un second (26) films diélectriques de nitrure transparents, ledit second film ayant un indice de réfraction qui est plus faible que celui dudit premier film.

2. Elément de mémoire magnéto-optique selon la revendication 1, comprenant en outre:
un substrat transparent (10) formé sur ladite première couche diélectrique de nitrure transparente; et
une couche réfléchissante (20) formée sur ladite seconde couche diélectrique de nitrure transparente.

3. Elément de mémoire magnéto-optique selon la revendication 1 ou la revendication 2, dans lequel ladite couche d'enregistrement de film mince en alliage amorphe est une couche de film mince en alliage GdTbFe.

4. Elément de mémoire magnéto-optique selon la revendication 3, dans lequel ladite couche de film mince en alliage GdTbFe a une épaisseur de 35 nm.

5. Elément de mémoire magnéto-optique selon l'une quelconque des revendications 1 à 4, dans lequel l'indice de réfraction dudit premier film est égal à environ 2,0, et l'indice de réfraction dudit second film est compris entre 1,8 et 1,9 environ.

6. Elément de mémoire magnéto-optique selon l'une quelconque des revendications 1 à 5, dans lequel ladite première couche diélectrique de nitrure transparente est un film de SiN d'environ 90 nm d'épaisseur, et ladite seconde couche diélectrique de nitrure transparente est un film de AlN d'environ 40 nm d'épaisseur.

7. Elément de mémoire magnéto-optique selon la revendication 5, dans lequel ladite première couche diélectrique de nitrure transparente est un film de AlN d'environ 90 nm d'épaisseur, et ladite seconde couche diélectrique de nitrure transparente est un film de AlN d'environ 40 nm d'épaisseur.

8. Elément de mémoire magnéto-optique selon la revendication 5, dans lequel ladite première couche diélectrique de nitrure transparente est un film de $Si_3N_4$ d'environ 90 nm d'épaisseur, et ladite seconde couche diélectrique de nitrure transparente est un film de $Si_3N_4$ d'environ 40 nm d'épaisseur.

9. Procédé de fabrication d'un élément de mémoire magnéto-optique comprenant les étapes suivantes:
(a) formation d'une première couche diélectrique de nitrure transparente sur un substrat transparent;
(b) formation d'une couche d'enregistrement de film mince en alliage, comprenant une terre rare et un métal de transition, sur la couche diélectrique de nitrure transparente;
(c) formation d'une seconde couche diélectrique de nitrure transparente sur ladite couche d'enregistrement de film mince en alliage; et
(d) formation d'une couche réfléchissante sur ladite seconde couche diélectrique de nitrure transparente; dans lequel
lesdites première et seconde couches diélectriques de nitrure transparentes sont formées par un procédé de pulvérisation cathodique réactive, et dans lequel la pulvérisation cathodique est contrôlée de manière à faire en sorte que l'indice de réfraction de la seconde couche diélectrique de nitrure transparente soit inférieur à celui de la première couche diélectrique de nitrure transparente.

10. Procédé selon la revendication 9, dans lequel une pression de gaz à laquelle ladite première couche diélectrique de nitrure transparente est formée est inférieure à une pression de gaz à laquelle ladite seconde couche diélectrique de nitrure transparente est formée.

FIG.1

FIG.2

FIG.3

GAS PRESSURE (m Torr)

(1 Torr = 133 Pa)

FIG. 4